# EUROPEAN PATENT SPECIFICATION

(11) **EP 0 845 953 B1**
(45) Date of publication and mention of the grant of the patent: **27.12.2000**
(21) Application number: 97923268.3
(22) Date of filing: 20.05.1997
(51) Int. Cl.: A23L 1/28, A23B 7/06

(54) **METHOD FOR PRODUCTION SAUSAGE PREPARATION BASED ON MUSHROOM RAW MATERIAL AND CONTAINING VEGETAL PROTEIN**
PRODUKTIONSVERFAHREN ZUR WURSTHERSTELLUNG BASIEREND AUF ROHMATERIAL AUS PILZEN UND PFLANZLICHEN PROTEINEN
PROCEDE DE PRODUCTION DE SAUCISSES A BASE DE CHAMPIGNONS ET DE PROTEINES VEGETALES

(30) Priority: 20.05.1996 HU 9600013
(43) Date of publication of application: 10.06.1998
(73) Proprietor: Nemethne Balázsi, Eva, 4031 Debrecen (HU)
(72) Inventor: Nemethne Balázsi, Eva, 4031 Debrecen (HU)
(74) Representative: Viering, Jentschura & Partner
(86) International application number: HU9700023
(87) International publication number: WO9743911

(56) References cited:
- EP-A- 0 121 579
- DE-A- 3 531 482
- DATABASE WPI Section Ch, Week 9336 Derwent Publications Ltd., London, GB; Class D13, AN 93-011133 XP002041914 & HU 207 937 B (AGOCS I) , 28 July 1993 cited in the application

## Description

The invention relates to a method for production sausage preparation based on mushroom raw material and containing vegetal protein. In the course of the method the cleaned and heat-treated mushroom raw material should be chopped up and stirred with fat of 10-40 % of weight, spice mixture of 0.1-4 % of weight, taste improving additive of 0.4-0.5 % of weight and in particular case with preservative and then it should be filled into wrapping skin. The next step is the follow-up treatment, namely washing, drying and/or smoking

Nutrition of nowadays is more and more vegetable-oriented. The different kind of mushroom species get more and more important role. This can be accounted for their low fat content and high protein and mineral content.
Mentioning the spiced sausage preparation of mushroom raw material, the so-called "mushroom roll" we generally mean various kind of foodstuffs containing mushroom. They can have different size, form and taste. Such foodstuffs are the several types of white and black puddings, sausages and stuffing material made by different preservative methods like heat treatment or without it by smoking or possibly by ripening in drying chamber.

A method for production mushroom concentration food which is non-perishable for a long time is described by the publishing document No. DE 3.040.746. According to the description champignon mushroom should be washed through with water and then it is treated by colour stabilizing additive that is practically citric acid The next step is chopping the mushroom and subjecting it to heat-treatment on 100-120 °C. After the treatment liquid is prepared which should be mixed with vegetable oil and finally the mixture is sterilized and packed.

Producing scalded and deep-frozen mushroom preparation is described by the European publishing document No. 121.579. Mushroom is scalded in oil of 120-220 °C of temperature and then mushroom separated from oil is preserved by deep-freezing.

Nevertheless the disadvantage of such methods that they utilize only the cap of the mushroom having big cap for e.g. Pleurotus ostreatus or champignon and they regard the stem as waste material.

The patent description No. HU 207937 concerns producing mushroom sausage preparations containing vegetal protein. The essence of the method is the following: the stem of mushroom should be cooked in water at 20-80 weight ratio. Then preservative, soya flakes, fat and various spices should be added to it. After this the material should be homogenized, filled into sausage-skin and smoked.

At the method described above the stem of mushroom is utilized. Because of its structural diversity from the cap, it is less tasty and can be blended in lesser extent with the additive material than the cap of mushroom.

Further disadvantage of the method is that chopping the stem of mushroom is difficult because of its structural features. This deficiency of the method can be the basis of the fact that it didn't become universal in practice.

The aim of the method described in the invention is elaboration of a mushroom-processing method which doesn't produce waste material and by means of it the mushroom regarded as industrially non-utilizable waste material until now can be processed and the final product is non-perishable for a long time.

In addition our aim was making possible an easy and reliable process of the stem of special characteristic features by the method and thus introducing a solution suitable for producing a sausage-preparation

The basic of the thought of invention was a recognition that the problem can be solved by bringing the stem to such a physical condition where it can be easily treated, chopped and by reducing the possibility of contamination to the minimum in the course of the filling.

According to the aim set, the method for production sausage preparation based on mushroom raw material and containing vegetal - in which the cleaned and heat-treated mushroom raw material should be chopped up and stirred with fat of 10-40 % of weight, spice mixture of 0.1-4 % of weight, taste improving additive of 0.4-0.5 % of weight and in particular case with preservative and then it should be filled into wrapping skin, and then it is submitted to follow-up treatment, namely washing, drying and/or smoking - is based upon that the water-content of mushroom raw material should be reduced after cleaning and heat-treatment and then the mushroom raw material of reduced water-content should be cooled under 0 °C and only after this process will be chopped, and the material stirred should be filled into sausage-skin under vacuum.

A further characteristic feature of the method according to the invention we add foaming and structural loosening additive into the mixture in the course of stirring

An advantageous version of the method is subjecting the sausage preparation to a secondary water withdrawal in the course of the follow-up treatment in a drying, ripening chamber for 5-30 days and thus a sausage preparation of 25-50 % of weight of water content can be obtained.

In another version of the method, that we use animal fat.

In a further realization of the method, that we use reconstructed bacon consisting of vegetal material as fat. We use 1-3 % of weight of rice meal and/or corn grist and/or soya powder and 1-3 % of weight of red paprika, 0.1-0.3 % of weight of caraway seed, 0.02-0.1 % of weight of celery powder, 0.001-0.003 % of weight of nutmeg grist and 0.001-0.03 % of weight of coriander grist as spice mixture.

In an advantageous version of the method an emulsifier made by 1:4:4 rate of mixture of soya isolate, water and fat or oil and 2-5 % of weight of additive material containing 0.03-0.08 % of weight of curcuma and 0.03-0.08 % of weight of curry powder are added to the mixture.
0.04 % of weight of onion pulp, practically garlic pulp, not more than 3 % of weight of salt and 0.1-0.5 % of weight of pepper are added into the spice mixture.

The method has several advantages. The most important from them is that this mushroom processing technology results more tasty product since it utilizes the whole mushroom and its taste stands closer to the habitual, accepted or popular taste.

Its further advantage that the enjoyment value of the sausage preparation produced according to the method is similar to the one made of meat but our sausage preparation is more abundant because of its light specific density.

Another advantage that a patient ordered to eat only vegetal meal by the doctor can comply with the prescription of the physician more easily by keeping the traditional tastes since the preparation recalls the habitual seasoning not only by its form, and view but by its taste as well. Moreover by its protein and mineral content it improves the health condition of the consumer.

Also advantageous that the method makes the full utilization of the whole mushroom possible and easy and reliable chopping the stem of mushroom into pieces being under the desired size limit.

An economical advantage that this product can be consumed in the world of peoples refusing the eating of pork meat because of religious reasons and thus it can be sold also in those countries and it can result significant profit.

### Example 1

We scalded 66 % of weight of Pleurotus ostreatus caps and stems cleaned and rinsed by shower washing together with boiling water in 200 liters of clean, boiling water and then we cooled this mixture on -3 °C, for 24 hours by minimizing the icing.

Then pre-cooled, 26 % of weight of industrial bacon was chopped in piece cutter and the scalded and pre-cooled mushroom was chopped into final particle size and stirred while 0.4 % of weight of garlic, 2 % of weight of purina soya, 2 % of weight of salt, 0.2 % of weight of Sodium-glutamate and general spices such as pepper, caraway seed, nutmeg and coriander and dried vegetable leaves were added into the mixture.

The filling material seasoned and stirred according to the method above we filled into animal intestine skin. After a cool waterbath we smoked it for 3-5 days and dried it in ripening chamber for another 11 days. Finally after water-salt, microbiological and sense examinations we packed it into vacuum package.

### Example 2

We scalded 66 % of weight of mushroom caps and stems in 200 liters of clean, boiling water and then we pre-cooled, chopped and seasoned them according to the method described above with the following difference: 2 % of weight of various dried and coarse vegetables, cheese and other taste-improving and conditioning materials were added to the mass.

The mass was filled into plastic or animal sausage-skin of different size and format depending on seasoning. Then we placed it into cooking-smoking container and after heat-treatment, adequate chemical and sense laboratory examinations, registering by different packaging-technologies according to taste and form we transported it into the storehouse of final products.

### Example 3

We stirred 1.3-1.5 kg of an additive named "ALVRAP" into 38 liters of boiling water to creamy and then we poured 50 liters of edible oil of 60 °C into the mixture very slowly, while it was heated for not permitting the temperature to decrease below 50 °C.

Meanwhile we solved 2.3-2.5 % of weight of an additive named "FSPN" in 12.5 liters of cold water and this solution was poured together with the mixture prepared previously. Then we let it cool for 24 hours on 1-2 °C, while it was hardened to the stiffness of bacon. We used this so-called "reconstructed bacon" in the following process.

We scalded 67 % of weight of Pleurotus ostreatus caps and stems cleaned and rinsed by shower washing into 200 liters of boiling water We cooled it for 24 hours on -1 °C, while we prepared an emulsifier by mixing 5 kg of soya isolate type "Supra 500 E" with 200 liters of water and 20 kg of edible oil or melted fat

Then we chopped 65 % of weight of mushroom, 25 % of weight of reconstructed bacon, 3 % of weight of emulsifier with 0.4 % of weight of garlic, 2 % of weight of paprika powder, 2 % of weight of purina soya, 2 % of weight of salt, 0.2 % of weight of Sodium-glutamate and 0.1 % of weight of cayenne pepper into foamed pulp in the piece cutter, we stirred it and then mixed it with 0.05 % of weight of dried celery leaves, desired amount of Indian crocus, curry, caraway seed, other exotic spices of Middle- and Far-East and dried vegetable pieces.

The mass stirred we filled into plastic sausage-skin and formed into filling material, heat-treated in cooking-smoking container, submitted to examination and finally we offered it for sale.

### Example 4

We scalded 68 % of weight of 50-50 % of mixture of Pleurotus ostreatus and champignon cleaned and rinsed by shower washing into 200 liters of clean, boiling water and then we cooled it for 24 hours on a temperature between -1 and -6 °C, while minimizing the icing of mushroom.

We produced reconstructed bacon according to the method described in Example 3. We chopped the 68 % of weight of pre-cooled mushroom in a piece cutter and added 27 % of weight of reconstructed bacon, 0.4 % of weight of garlic oil, 2 % of weight of salt, 0.2 % of weight of Sodium-glutamate, 0.2 % of weight of pepper, 2 % of weight of red paprika powder and 0.2 % of weight of exotic or local spice mixture of individually designed into it

In the course of production we performed the water-, salt-, chemical, microbiological and sense-examinations and then we filled the ready paste into sausage-skin of non-animal origin and after 3 days of cold smoking and 11 days of drying in ripening chamber we produced a final product of 26-32 % of weight of water. We distributed it in vacuum packaged form.

### Example 5

We scalded 65 % of weight of champignon caps and stems of Class III and IV, cleaned and rinsed by shower washing into 200 liters of clean, boiling water, pre-cooled it by using the usual method and then we chopped 25 % of weight of pre-cooled bacon of animal origin (cattle, sheep, poultry or pork), the scalded mushroom, 0.4 % of weight of garlic pulp, 2 % of weight of powdered soya, 2 % of weight of salt, 0.2 % of weight of Sodium-glutamate, 2 % of weight of red paprika, 1 % of weight of pepper, 1.5 % of weight of dried vegetable leaves and different spices, for example marjoram, ground bay leaf in a piece cutter into desirable particle size and meanwhile stirring we mixed pieces of champignons pre-steamed on onion into the mass.

The mass stirred to ready was filled into sausage-skin of animal origin by us, then we formed a Vienna-sausage shape product by heat-treatment, it was dried in a drying-climatizing chamber for 14 days and then we transported it packaged into vacuum foil into the storehouse.

## Claims

1. Method for production of a sausage preparation based on mushroom raw material and containing vegetal protein, in which the cleaned and heat-treated mushroom raw material should be chopped up and stirred with fat of 10-40 % of weight, spice mixture of 0.1-4 % of weight, taste improving additive of 0.4-0.5 % of weight and in particular case with preservative and then it should be filled into wrapping skin, and then it is submitted to a follow-up treatment, namely washing, drying and/or smoking, **characterised in that**, we reduce the water-content of mushroom raw material after cleaning and heat-treatment and then the mushroom raw material of reduced water-content should be cooled under 0 °C and only after this process will be chopped and the material stirred should be filled into sausage-skin under vacuum.

2. The method as in claim 1, **characterised in that**, we add foaming and structural loosening additive into the mixture in the course of stirring.

3. The method as in claims 1 or 2, **characterised in that**, in the course of the follow-up treatment we submit the sausage-preparation to a secondary water-withdrawal for 5-30 days in a drying, ripening chamber and thus we get a sausage-preparation of 25-50 % of weight of water.

4. The method as in any of claims 1 to 3, **characterised in that**, we use animal fat.

5. The method as in any of claims 1 to 3, **characterised in that**, we use reconstructed bacon consisting of vegetal material as fat.

6. The method as in any of claims 1 to 5, **characterised in that**, we use 1-3 % of weight of rice meal and/or corn grist and/or soya powder and 1-3 % of weight of red paprika, 0.1-0.3 % of weight of caraway seed, 0.02-0.1 % of weight of celery powder, 0.001-0.003 % of weight of nutmeg grist and 0.001-0.03 % of weight of coriander grist as spice mixture.

7. The method as in any of claims 1-6, **characterised in that**, an emulsifier made by 1:4:4 rate of mixture of soya isolate, water and fat or oil and 2-5 % of weight of additive material containing 0.03-0.08 % of weight of curcuma and 0.03-0.08 % of weight of curry powder are added to the mixture.

8. The method as in any of claims 1 to 7, **characterised in that**, 0.04 % of weight of onion pulp, practically garlic pulp, not more than 3 % of weight of salt and 0.1-0.5 % of weight of pepper are added into the spice mixture.

## Patentansprüche

1. Verfahren zum Herstellen einer Wurstzusammensetzung auf Basis eines Pilzrohmaterials, welche Gemüseprotein enthält, wobei das gereinigte und mit Wärme behandelte Pilzrohmaterial zerhackt und mit 10-40 Gew.% Fett, 0,1-4 Gew.% einer Gewürzmischung, 0,4-0,5 Gew.% eines Geschmacksverbesserungszusatzes und in besonderen Fällen einem Konservierungsmittel verrührt wird, dann sollte es in eine Verpackungshaut eingefüllt werden, und dann wird sie einer Nachbehandlung unterzogen, nämlich Waschen, Trocknen und/oder Räuchern,
dadurch gekennzeichnet,
daß man den Wassergehalt des Pilzrohmaterials nach dem Säubern und der Wärmebehandlung reduziert, und dann sollte das Pilzrohmaterial mit reduziertem Wassergehalt bis auf unter 0°C abgekühlt werden und wird erst nach diesem Vorgang zerhackt, und das verrührte Material sollte unter Vakuum in eine Wursthaut eingefüllt werden.

2. Verfahren wie in Anspruch 1, dadurch gekennzeichnet,
daß man im Laufe des Rührens Schäumungs- und Strukturauflockerungsmittel in die Mischung zugibt.

3. Verfahren wie in den Ansprüchen 1 oder 2, dadurch gekennzeichnet, daß man im Laufe der Nachbehandlung die Wurstzusammensetzung einem sekundären Wasserentzug für 5-30 Tage in einer Trocken- und Reifekammer unterzieht, und man erhält somit eine Wurstzusammensetzung von 25-50 Gew.% Wasser.

4. Verfahren wie in einem der Ansprüche 1 bis 3, dadurch gekennzeichnet,
daß man Tierfett verwendet.

5. Verfahren wie in einem der Ansprüche 1 bis 3, dadurch gekennzeichnet,
daß man als Fett rekonstituierten Speck verwendet, der Gemüsematerial enthält.

6. Verfahren gemäß einem der Ansprüche 1 bis 5, dadurch gekennzeichnet,
daß man 1-3 Gew.% Reismehl und/oder Maismahlgut und/oder Sojapulver und 1-3 Gew.% rote Paprika, 0,1-0,3 Gew.% Kümmel, 0,02-0,1 Gew.% Seleriepulver, 0,001-0,003 Gew.% Muskatnußmahlgut und 0,001-0,03 Gew.% Koriandermahlgut als Gewürzmischung verwendet.

7. Verfahren wie in einem der Ansprüche 1 bis 6, dadurch gekennzeichnet,
daß der Mischung ein Emulgator zugegeben wird, der durch einen 1:4:4 Mischungsanteil von Sojaisolat, Wasser und Fett oder Öl und 2-5 Gew.% eines Zusatzmaterials, das 0,03-0,08 Gew.% Kurkume und 0,03-0,08 Gew.% Currypulver enthält, hergestellt ist.

8. Verfahren wie in einem der Ansprüche 1 bis 7, dadurch gekennzeichnet,
daß 0,04 Gew.% Zwiebelbrei, oder Knoblauchbrei, nicht mehr als 3 Gew.% Salz und 0,1-0,5 Gew.% Pfeffer in die Gewürzmischung zugegeben werden.

## Revendications

1. Méthode de production de saucisses à base de champignons et contenant de la protéine végétale, pendant laquelle les champignons, après avoir été nettoyés et traités de chaleur, doivent être coupés en morceaux et mélangés avec de la graisse d'un poids de 10-40%, un mélange d'épices d'un poids de 0,1-4%, un additif améliorant le goût d'un poids de 0,4-0,5% et dans certains cas avec substances de conservation; ensuite ils doivent être enveloppés de peau, et après ils subissent un traitement supplémentaire de lavage, séchage et/ou traitement de fumée, caractérisé en ce qu'on réduit le contenu d'eau dans les champignons après le nettoyage et le traitement de chaleur; ensuite les champignons dont le contenu d'eau a été réduit doivent être réfrigérés en-dessous de 0°C, et ce n'est qu'après ce procédé que les champignons coupés en morceaux et mélangés doivent être enveloppés de peau de saucisse sous vide.

2. Méthode selon la revendication 1, caractérisée en ce qu'on ajoute un additif moussant et déstructurisant dans le mélange pendant le procédé de mélanger.

3. La méthode selon la revendication 1 ou 2, caractérisée en ce que, pendant le traitement supplémentaire, on retire une deuxième fois de l'eau de la saucisse pendant 5-30 jours dans un séchoir et ainsi on obtient une saucisse d'un poids de 25-50% d'eau.

4. La méthode selon l'une des revendications 1 à 3,
caractérisée en ce qu'on utilise de la graisse animale.

5. La méthode selon l'une des revendications 1 à 3,
caractérisée en ce qu'on utilise, en tant que graisse, du lard reconstitué, produit à base de matériel végétal.

6. La méthode selon l'une des revendications 1 à 5,
caractérisée en ce qu'on utilise 1-3% de poids de farine de riz et/ou de grains de maïs et/ou de poudre de soja et 1-3% de poids de paprika rouge, 0,1-0,3% de poids de graines de cumin, 0,02-0,1% de poids de poudre de céleri, 0,001-0,003% de poids de grains de muscade et 0,001-0,03% de poids de grains de coriandre comme mélange d'épices.

7. La méthode selon l'une des revendications 1-6, caractérisée en ce qu'un émulsifiant fait à un quota de 1:4:4 de soja isolé, d'eau et de graisse ou d'huile et 2-5% de poids de matériel additif contenant 0,03-0,08% de poids de curcuma et 0,03-0,08% de poids de poudre de curry sont ajoutés à ce mélange.

8. La méthode selon l'une des revendications 1 à 7,
caractérisée en ce que 0,04% de poids de pulpe d'oignons, ou de pulpe d'ail, pas plus de 3% de poids de sel et 0,1-0,5% de poids de poivre sont ajoutés au mélange d'épices.
